# EUROPEAN PATENT APPLICATION

(11) **EP 4 760 380 A1**
(43) Date of publication of application: **17.06.2026**
(21) Application number: 25212194.2
(22) Date of filing: 29.10.2025
(51) Int. Cl.: G02F 1/133, G02F 1/13357

(54) **DISPLAY APPARATUS**

(30) Priority: 10.12.2024 KR 20240183045
(71) Applicant: LG Display Co., Ltd., Seoul, 07336 (KR)
(72) Inventor: KIM, Jin Ryun, 10845 Paju-si (KR); KIM, Ji Gon, 10845 Paju-si (KR); LEE, Min Jin, 10845 Paju-si (KR); KIM, Dae Yong, 10845 Paju-si (KR); CHOI, Eun Hee, 10845 Paju-si (KR)
(74) Representative: Mellor, Rupert James Edward

(57) **Abstract**

Implementations of the disclosure describe a display apparatus including a backlight unit including a light guide plate, a backlight sheet having a sheet hole formed therein, and a backlight light source element configured to emit light to the light guide plate, a liquid crystal panel positioned on a front surface of the backlight unit, and an optical module positioned on a portion of a back surface of the backlight unit, the portion overlapping the sheet hole. The optical module includes a prism structure including a first prism surface oriented toward the liquid crystal panel, a second prism surface perpendicular to the first prism surface, and an inclined surface provided between the first prism surface and the second prism surface, an optical element positioned adjacent to the second prism surface, and a compensation plate positioned between the first prism surface and the sheet hole, the compensation plate having a light extraction pattern.

## Description

### CROSS-REFERENCE TO RELATED APPLICATION

Pursuant to 35 U.S.C. § 119(a), this application claims the benefit of an earlier filing date and right of priority to Korean Patent Application No. 10-2024-0183045, filed on December 10, 2024, the contents of which are hereby incorporated by reference in their entirety.

### TECHNICAL FIELD

The present disclosure relates generally to a display apparatus.

### BACKGROUND

In general, a display apparatus provides an image to a user. For example, the display apparatus may include a backlight unit and a liquid crystal panel that generates an image using light provided from the backlight unit. The backlight unit may include a backlight light source element positioned on one side surface of a light guide plate. The liquid crystal panel may be positioned on the light guide plate.

The display apparatus may include a light source module for detection of external light. For example, the light source module may include at least one of a camera or an IR sensor. The light source module may overlap a partial area of the liquid crystal panel. For example, the liquid crystal panel may include an active area overlapping the light guide plate and a sensing area overlapping the light source module.

The sensing area may be disposed within the active area. However, the sensing area of the liquid crystal panel does not emit light for image implementation. Accordingly, in the display apparatus, the quality of an image provided to a user may deteriorate due to a difference in luminance between the active area and the sensing area.

### SUMMARY

According to an aspect of the present disclosure, a display apparatus may substantially obviate one or more problems due to limitations and disadvantages of the related art. For example, the display apparatus may be used to improve characteristics of image quality (front-of-screen (FOS) quality) of an image displayed in a sensing area of a liquid crystal panel. To achieve these advantages, implementations of the disclosure provide an optical module that includes a compensation plate having a light extraction pattern formed thereon and a dedicated compensation plate light source, thereby improving image quality of the optical element while also compensating for luminance differences within the sensing area to improve the FOS quality of the display.

An object of embodiments of the present disclosure is to provide a display panel including an optical module and a display apparatus.

Another object of embodiments of the present disclosure is to secure image quality of an optical element provided in an optical module, and to improve characteristics of image quality (front-of-screen (FOS) quality) of an image displayed in a sensing area of a liquid crystal panel.

The objects to be accomplished by the present disclosure are not limited to the above-mentioned objects, and other objects not mentioned herein will be clearly understood by those skilled in the art from the following description.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

A display apparatus according to implementations of the present disclosure may include a backlight unit including a light guide plate, a backlight sheet having a sheet hole formed therein, and a backlight light source element configured to emit light to the light guide plate; a liquid crystal panel positioned on a front surface of the backlight unit; and an optical module positioned on a portion of a back surface of the backlight unit, the portion overlapping the sheet hole. The optical module includes a prism structure including a first prism surface oriented toward the liquid crystal panel, a second prism surface perpendicular to the first prism surface, and an inclined surface positioned between the first prism surface and the second prism surface; an optical element positioned adjacent to the second prism surface; and a compensation plate positioned between the first prism surface and the sheet hole, the compensation plate having a light extraction pattern. It will be understood that the term 'oriented toward' may describe each of two objects having surfaces which lie in parallel planes. For example, the first prism surface oriented toward the liquid crystal panel may be parallel to the liquid crystal surface. A sheet hole will be understood as a hole a sheet. For example, a sheet hole may be a hole in the backlight sheet.

One or more implementations may include the following optional features. The display apparatus may include a compensation plate light source. The compensation plate is configured to receive light from the compensation plate light source.

The optical module may include a compensation reflector positioned on a back surface of the compensation plate. The compensation reflector is configured to reflect light received from the compensation plate light source toward the liquid crystal panel.

A width of the first prism surface in a first direction may be smaller than a width of the sheet hole in the first direction.

The optical module may further include a prism light source configured to emit light into the prism structure. The optical module may also include a prism reflector positioned on the inclined surface of the prism structure.

The compensation plate may define a field-of-view area aligned with the optical element. The light extraction pattern is positioned on the compensation plate in a region outside of the field-of-view area.

The compensation plate may include a compensation plate hole formed therethrough. The compensation plate hole is aligned with the optical element to improve transmittance of external light to the optical element.

A display apparatus according to other implementations of the present disclosure may include a backlight unit having a sheet hole; a liquid crystal panel positioned on the backlight unit, the liquid crystal panel defining the sensing area in alignment with the sheet hole; and an optical module positioned to overlap the sheet hole, the optical module. The optical module includes a first illumination assembly configured to illuminate a central portion of the sensing area, the first illumination assembly including a prism structure and a first light source positioned to emit light into the prism structure; a second illumination assembly configured to illuminate a peripheral portion of the sensing area around the central portion, the second illumination assembly including a compensation plate and a second light source positioned to emit light into the compensation plate; and an optical element positioned to receive external light passing through the prism structure.

One or more implementations may include the following optional features. For example, the prism structure may have a width in a first direction that is smaller than a width of the sheet hole in the first direction. The peripheral portion of the sensing area may correspond to a region between an edge of the prism structure and an edge of the sheet hole.

The prism structure may include a first prism surface oriented toward the liquid crystal panel, a second prism surface oriented toward the optical element, and an inclined surface positioned between the first and second prism surfaces. The first illumination assembly may further include a prism reflector positioned on the inclined surface.

The compensation plate may include a light extraction pattern configured to direct light received from the second light source toward the peripheral portion of the sensing area.

The second illumination assembly may further include a compensation reflector positioned on a back surface of the compensation plate.

The first light source and the second light source may be configured to be driven simultaneously with a backlight light source element of the backlight unit.

The optical element may include a camera and an infrared (IR) sensor.

The display apparatus may further include a module sheet positioned between the prism structure and the optical element. The module sheet includes a module filter layer configured to block visible light from reaching the IR sensor while passing external light to the camera.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate implementations of the disclosure and together with the description serve to explain the principle of the disclosure. In the drawings:
FIG. 1 is a plan view schematically showing a display apparatus according to an implementation of the present disclosure;
FIG. 2A is a view showing an example of a cross section taken along lines I-I' and II-II' in FIG. 1, and FIG. 2B is a view showing another example of the cross section taken along the lines I-I' and II-II' in FIG. 1;
FIG. 3 is an enlarged view of an area K2 in FIG. 2A;
FIG. 4 is a view showing a cross section taken along line III-III' in FIG. 1;
FIG. 5 is a view for description of a prism light source, a prism, a prism reflector, a compensation plate, a compensation reflector, and a compensation plate light source provided in an optical module of the present disclosure;
FIG. 6 is a view for description of the prism, a module sheet, and an optical element provided in the optical module of the present disclosure;
FIG. 7A is a view for description of a relationship between a sheet hole provided in a backlight sheet and the compensation plate and a prism structure of the optical module of the present disclosure, and FIG. 7B is a view showing a part of a sensing area HA while an image is displayed on a liquid crystal panel in order to describe image quality (front-of-screen (FOS) quality) of the liquid crystal panel;
FIG. 8 is view for description of an example of the locations of the prism light source and the compensation plate light source of the present disclosure;
FIG. 9 is a view for description of an example of a pattern area in which a light extraction pattern of the present disclosure is provided;
FIG. 10 is a view for description of an example of the location of the light extraction pattern on the surface of the compensation plate of the present disclosure; and
FIG. 11 is a view for description of an example of a compensation plate hole provided in the compensation plate of the present disclosure.

### DETAILED DESCRIPTION

Implementations of the disclosure relate to display apparatuses, and more particularly, to a structure for improving the image quality of a display that includes an integrated optical sensor. As optical sensors such as cameras are integrated directly within the active area of a display, a corresponding sensing area is formed that allows external light to reach the sensor. This can lead to challenges such as a visible luminance difference between the active display area and the sensing area, which degrades the front-of-screen (FOS) quality of the displayed image.

Accordingly, implementations disclosed herein provide a display apparatus with an improved optical module that addresses these challenges. In various implementations, a prism structure is configured to illuminate the sensing area, where the prism structure is intentionally formed to be narrower than a camera hole aligned with the sensing area. To illuminate the resulting dark, non-overlapping portion of the camera hole, a compensation plate with a light extraction pattern is positioned between the prism structure and the camera hole. This arrangement allows for the targeted delivery of light from a dedicated compensation plate light source into the dark portion, creating luminance that is uniform with the rest of the display. Furthermore, by enabling a narrower prism structure without sacrificing display uniformity, the field of view for the optical sensor is less obstructed, which can contribute to an improvement in the quality of the image captured by the sensor.

Additional advantages and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

In the following description of examples or implementations of the disclosure, reference will be made to the accompanying drawings in which it is shown by way of illustration specific examples or implementations that can be implemented, and in which the same reference numerals and signs can be used to designate the same or like components even when they are shown in different accompanying drawings from one another. Further, in the following description of examples or implementations of the disclosure, detailed descriptions of well-known functions and components incorporated herein will be omitted when it is determined that the description may make the subject matter in some implementations of the disclosure rather unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise..

In addition, the same or extremely similar elements may be designated by the same reference numerals throughout the specification. In the drawings, the lengths and thickness of layers and regions may be exaggerated for convenience. It will be understood that, when a first element is referred to as being "on" a second element, the first element may be disposed on the second element to come into contact with the second element, and a third element may be interposed between the first element and the second element.

Here, terms such as, for example, "first" and "second" are used to describe various elements and are used to distinguish one element from another element. However, the first element and the second element may be arbitrarily named according to the convenience of those skilled in the art without departing from the technical sprit of the present disclosure.

The terms used in the specification of the present disclosure are merely used in order to describe particular implementations, and are not intended to limit the scope of the present disclosure. For example, an element described in the singular form is intended to include a plurality of elements unless the context clearly indicates otherwise. In addition, in the specification of the present disclosure, it will be further understood that the terms "comprises" and "includes" specify the presence of stated features, integers, steps, operations, elements, components, and/or combinations thereof, but do not preclude the presence or addition of one or more other features, integers, steps, operations, elements, components, and/or combinations.

Unless otherwise defined, all terms including technical and scientific terms used herein have the same meaning as commonly understood by those skilled in the art to which the present disclosure belongs. It will be further understood that terms, such as those defined in commonly used dictionaries, should be interpreted as having a meaning that is consistent with their meaning in the context of the relevant art and should not be interpreted in an idealized or overly formal sense unless explicitly defined in the specification of the present disclosure.

Further, in the specification, the front surface of an element means one surface of the element, which is positioned in a direction in which an image is displayed, and the back surface means the other surface of the element, which is positioned in the opposite direction to the front surface.

In addition, in the specification, a first direction may mean the same direction as an inclination direction in which the slope of the inclined surface of a prism structure is formed, a second direction may mean a direction intersecting the first direction and a plane direction of a liquid crystal panel, and a third direction may mean a direction intersecting the first and second directions and a thickness direction of the prism structure and may mean a direction in which the liquid crystal panel and a backlight unit are stacked.

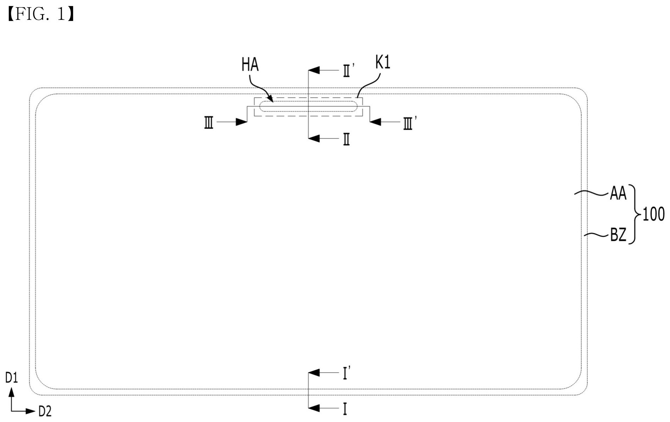

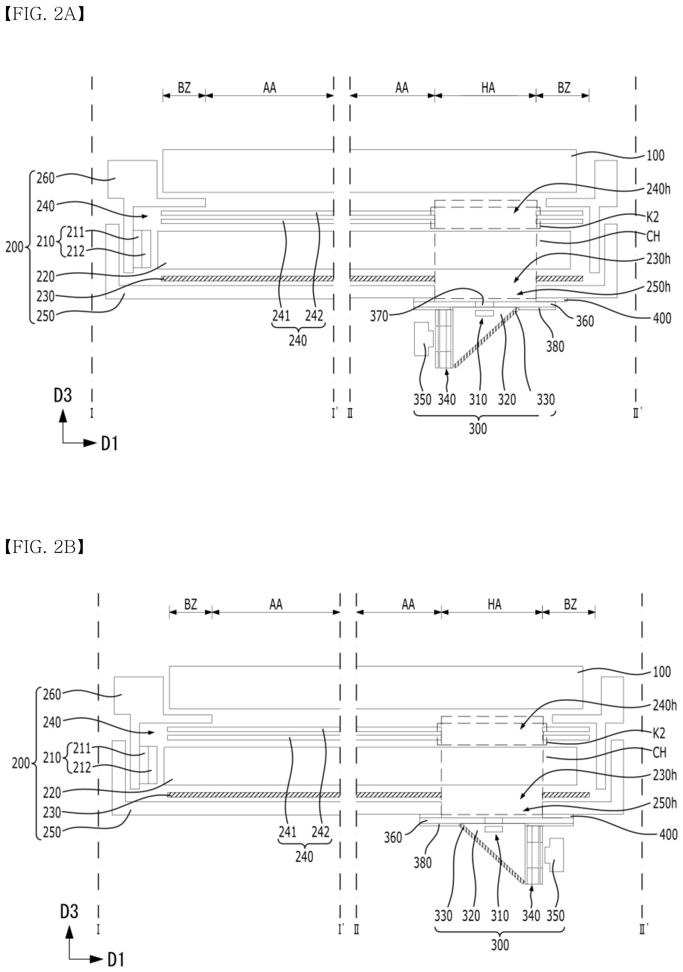

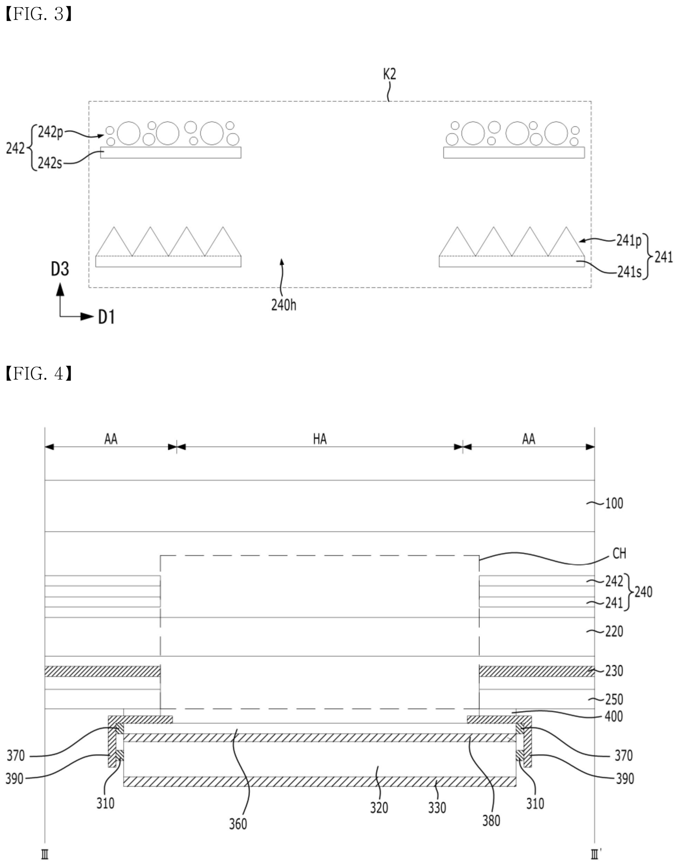

FIG. 1 is a plan view schematically showing a display apparatus according to an implementation of the present disclosure. FIG. 2A is a view showing an example of a cross section taken along lines I-I' and II-II' in FIG. 1, and FIG. 2B is a view showing another example of the cross section taken along lines I-I' and II-II' in FIG. 1. FIG. 3 is an enlarged view of an area K2 in FIG. 2A. FIG. 4 is a view showing a cross section taken along line III-III' in FIG. 1.

Referring to FIGs. 1 to 4, the display apparatus according to the implementation of the present disclosure may include a liquid crystal panel 100, a backlight unit 200, and an optical module 300.

The liquid crystal panel 100 may generate an image to be provided to a user. For example, the liquid crystal panel 100 may include an active area AA having a plurality of pixel areas positioned therein and a bezel area BZ positioned outside the active area AA.

The liquid crystal panel 100 may include a liquid crystal layer overlapping the pixel areas. For example, the liquid crystal layer of the liquid crystal panel 100 may include a liquid crystal in an IPS mode or a liquid crystal in a TN mode. Various signals may be applied to the respective pixel areas through signal lines.

For example, liquid crystals positioned within a part of the liquid crystal layer overlapping each pixel area may be rotated by a vertical electric field or a horizontal electric field formed within the corresponding pixel area through signal lines. Accordingly, in the display apparatus according to the implementation of the present disclosure, various color images may be generated by light emitted from the active area AA of the liquid crystal panel 100.

The backlight unit 200 may supply light to the liquid crystal panel 100. For example, the backlight unit 200 may include a backlight light source element 210, a light guide plate 220, a backlight reflector 230, and a backlight sheet 240.

The backlight light source element 210 may supply light to the liquid crystal panel 100 through the light guide plate 220. For example, the backlight light source element 210 may be positioned on one side surface of the light guide plate 220. The liquid crystal panel 100 may be positioned on the front surface of the light guide plate 220. The backlight light source element 210 may include a backlight circuit board 211 and a backlight light source 212 mounted on the backlight circuit board 211. The backlight light source 212 may be a self-luminous element capable of generating and emitting light. For example, the backlight light source 212 may include an LED.

The light guide plate 220 may be positioned between the backlight reflector 230 and the liquid crystal panel 100, and the backlight light source element 210 may be positioned on the side surface of the light guide plate 220. The light guide plate 220 may receive light from the backlight light source element 210 and emit the received light in a front surface direction in which the liquid crystal panel 100 is positioned, and may include a transparent material.

The light guide plate 220 may include a pattern configured to reflect and refract light received from the backlight light source element 210 and to emit the reflected and refracted light in a front surface direction D3 in which the liquid crystal panel 100 is positioned. However, the present disclosure is not necessarily limited thereto, and the pattern may be omitted depending on cases. In addition, FIGs. 2A and 2B show, as an example, a case in which the light guide plate 220 is positioned at a portion in which a camera hole CH is formed. Meanwhile, the light guide plate 220 may have a hole positioned corresponding to the portion in which the camera hole CH is formed, or the pattern through which light incident from the backlight light source element 210 is reflected and refracted may be omitted.

The backlight reflector 230 may be positioned on the back surface of the light guide plate 220. The back surface of the light guide plate 220 may face the front surface of the light guide plate 220. For example, the backlight reflector 230 may include a material capable of reflecting light. For example, the backlight reflector 230 may include metal such as aluminum (Al) and silver (Ag).

Accordingly, in the display apparatus according to the implementation of the present disclosure, light emitted through the back surface of the light guide plate 220 may be reflected toward the liquid crystal panel 100 by the backlight reflector 230. Therefore, in the display apparatus according to the implementation of the present disclosure, the amount of light supplied to the liquid crystal panel 100 may be increased by the backlight unit 200.

The backlight sheet 240 may be positioned between the light guide plate 220 and the liquid crystal panel 100. Light supplied to the liquid crystal panel 100 through the light guide plate 220 may have overall uniform luminance due to the backlight sheet 240. For example, the backlight sheet 240 may have a laminated structure in which a prism sheet 241 and a diffusion sheet 242 are laminated.

The prism sheet 241 may include a prism member 241p positioned on a first base substrate 241s. For example, the cross-sectional shape of the prism member 241p may have a shape in which triangles are repeatedly arranged.

The first base substrate 241s may include a transparent material. For example, the first base substrate 241s may include plastic. The prism member 241p may include a transparent material. For example, the prism member 241p may be formed of the same material as that of the first base substrate 241s. A boundary between the first base substrate 241s and the prism member 241p may not be visually recognized.

The diffusion sheet 242 may include diffusion particles 242p dispersed on a second base substrate 242s. The second base substrate 242s may include a transparent material. For example, the second base substrate 242s may include plastic. The second base substrate 242s may include the same material as that of the first base substrate 241s.

The diffusion particles 242p may have various sizes. Accordingly, in the display apparatus according to the implementation of the present disclosure, it is possible to improve uniformity of light supplied to the liquid crystal panel 100 through the backlight sheet 240. The diffusion particles 242p may be fixed on the second base substrate 242s by a transparent resin.

The backlight unit 200 may include a bottom cover 250 configured to accommodate the backlight light source element 210, the light guide plate 220, the backlight reflector 230, and the backlight sheet 240.

The bottom cover 250 may include an insulating material. For example, the bottom cover 250 may include plastic. The bottom cover 250 may include a bottom surface and side walls each protruding from an edge of the bottom surface.

The backlight reflector 230 may be positioned between the light guide plate 220 and the bottom surface of the bottom cover 250. The backlight light source element 210, the light guide plate 220, and the backlight sheet 240 may be positioned within a space formed by the opposite side walls of the bottom cover 250. For example, the side walls of the bottom cover 250 may surround the backlight light source element 210, the light guide plate 220, and the backlight sheet 240.

The backlight unit 200 may include a middle frame 260 configured to support the liquid crystal panel 100. The middle frame 260 may be coupled to the bottom cover 250. For example, the middle frame 260 may include a coupling area extending toward a space formed between the bottom cover 250 and the light guide plate 220.

The backlight light source element 210 may be fixed to the coupling area of the middle frame 260. For example, the backlight light source element 210 may be attached to the coupling area of the middle frame 260 by an adhesive member. The middle frame 260 may include a mounting area extending toward a space formed between the backlight sheet 240 and the liquid crystal panel 100. The mounting area of the middle frame 260 may overlap an edge of the backlight sheet 240. For example, the mounting area of the middle frame 260 may overlap the bezel area BZ of the liquid crystal panel 100. The active area AA of the liquid crystal panel 100 may not overlap the mounting area of the middle frame 260. For example, the central area of the backlight sheet 240 may be exposed by the middle frame 260. The mounting area of the middle frame 260 may be in direct contact with the backlight sheet 240. Accordingly, in the display apparatus according to the implementation of the present disclosure, movement of the backlight sheet 240 may be prevented by the middle frame 260.

The optical module 300 may detect external light through the liquid crystal panel 100 and the backlight unit 200. For example, the optical module 300 may be positioned on the bottom cover 250 of the backlight unit 200.

The liquid crystal panel 100 may include a sensing area HA for sensing of external light. The sensing area HA may be positioned within the active area AA. For example, the backlight reflector 230 may include a reflector hole 230h overlapping the sensing area HA of the liquid crystal panel 100, the backlight sheet 240 may include a sheet hole 240h overlapping the sensing area HA of the liquid crystal panel 100, and the bottom cover 250 may include a cover hole 250h overlapping the sensing area HA of the liquid crystal panel 100. The first base substrate 241s and the second base substrate 242s of the backlight sheet 240 may not overlap the sensing area HA of the liquid crystal panel 100. The light guide plate 220 may not include a hole and may be positioned within the sensing area HA.

Here, the cover hole 250h overlaps the sheet hole 240h and the reflector hole 230h each overlapping the sensing area HA. In this manner, the cover hole 250h, the sheet hole 240h, and the reflector hole 230h may form the camera hole CH through which an optical path is provided to the optical module.

Here, the width of the sheet hole 240h, the width of the reflector hole 230h, and the width of the cover hole 250h each formed in a first direction D1 may be substantially the same within an error range. Alternatively, the field of view (FOV) of the optical element may be limited by the camera hole CH. As the field of view (FOV) of the optical element increases, the size of a prism structure 320 provided in the optical module 300 also increases, and the width of the camera hole CH also needs to increase.

In consideration of the above-described points, the width of the camera hole CH may be formed to gradually increase in order from the closest location to the optical module 300 in a direction away from the optical module 300. For example, the width of the cover hole 250h may be relatively small, and the width of the reflector hole 230h and the width of the sheet hole 240h may be formed to be relatively larger than the width of the cover hole 250h.

As shown in FIG. 2A and FIG. 2B, the optical module 300 may be positioned at a portion of the back surface of the backlight unit 200, which overlaps the sheet hole 240h.

As shown in FIG. 2A, an optical element 350 may be positioned close to the center of the backlight unit 200, and the surface of the prism structure 320 facing the optical element 350 may be oriented toward the inner side of the backlight unit 200. Alternatively, as shown in FIG. 2B, the optical element 350 may be positioned close to the outer side of the backlight unit 200, and the surface of the prism structure 320 facing the optical element 350 may be oriented toward the outer side of the backlight unit 200.

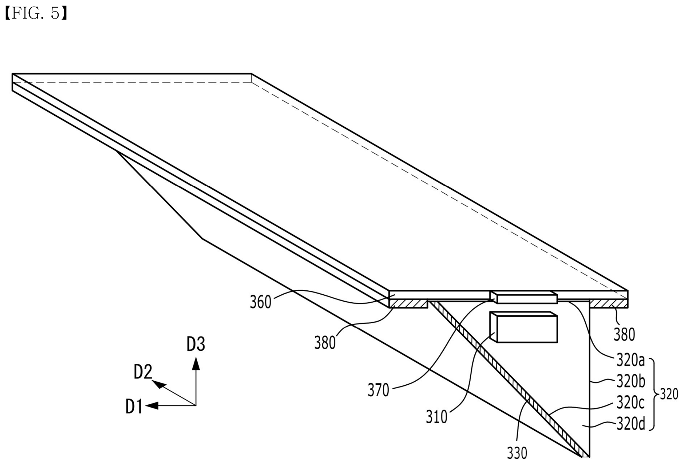

Hereinafter, the structure of the optical module 300 will be described in detail through FIG. 5 and the subsequent drawings.

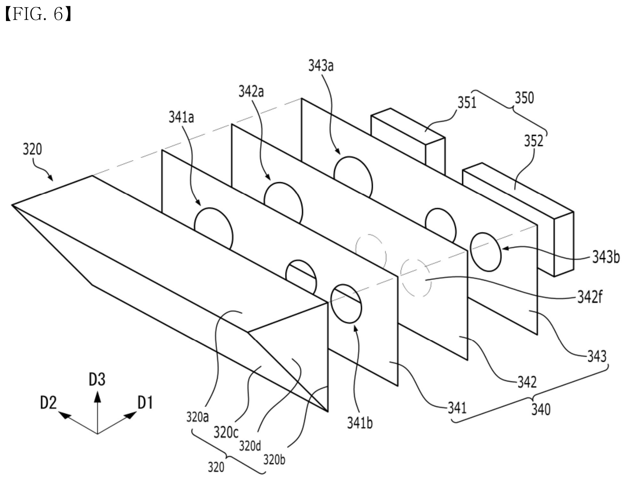

FIG. 5 is a view for description of a prism light source, a prism, a prism reflector, a compensation plate, a compensation reflector, and a compensation plate light source provided in the optical module of the present disclosure, and FIG. 6 is a view for description of the prism, a module sheet, and the optical element provided in the optical module of the present disclosure.

The optical module 300 may include a prism light source 310, the prism structure 320, a prism reflector 330, a module sheet 340, the optical element 350, a compensation plate 360, a compensation plate light source 370, and a compensation reflector 380, as shown in FIG. 5.

As shown in FIG. 5, the prism structure 320 refracts external light incident from the outside through the liquid crystal panel 100 and the backlight unit 200, causes the incident external light to enter the optical element 350, refracts internal light generated from the prism light source 310, and causes the refracted internal light to be emitted toward the liquid crystal panel 100.

The prism structure 320 includes a transparent material. Here, the prism structure 320 may be positioned on the back surface of the backlight unit 200 and may overlap the camera hole CH. The prism structure 320 may include a first prism surface 320a, a second prism surface 320b, an inclined surface 320c, and a side surface 320d of the prism structure 320.

The first prism surface 320a may be a surface oriented toward the liquid crystal panel 100, the second prism surface 320b may be a surface provided perpendicular to the first prism surface 320a and oriented toward the optical element. The inclined surface 320c may be a surface positioned between the first and second prism surfaces and may have an inclination in the first direction D1. The side surface 320d of the prism structure 320 may be a triangular surface that perpendicularly meets the first and second prism surfaces 320a and 320b and the inclined surface 320c.

The prism light sources 310 may be respectively positioned on the side surfaces 320d of the prism structure 320, which are oriented in a second direction D2. Accordingly, in the display apparatus according to the implementation of the present disclosure, light emitted from the prism light source 310 may be provided to the sensing area HA of the liquid crystal panel 100 by the inclined surface 320c of the prism structure 320.

Each of the prism light sources 310 may be a self-luminous element capable of generating and emitting light. For example, each of the prism light sources 310 may include an LED. Each of the prism light sources 310 may be the same element as that of the backlight light source 212. Each of the prism light sources 310 may be connected to a corresponding one of module circuit boards 390 (refer to FIG. 4) each configured to control on/off of the prism light source.

The prism light sources 310 may be turned on/off, simultaneously. The prism light sources 310 may be driven simultaneously with the backlight light source 212. For example, the liquid crystal panel 100 may generate an image using light emitted from the backlight light source element 210 and light emitted from the prism light sources 310. That is, in the present disclosure, when the liquid crystal panel 100 generates an image, light may be supplied to the sensing area HA of the liquid crystal panel 100 by the prism light sources 310.

Accordingly, in the present disclosure, when the liquid crystal panel 100 generates an image, light supplied to the sensing area HA may have substantially the same luminance as that of light supplied to the active area AA. Therefore, the display apparatus according to the implementation of the present disclosure may prevent deterioration in image quality due to a luminance difference between the active area AA and the sensing area HA.

The prism reflector 330 may be positioned on the inclined surface 320c of the prism structure 320. The prism reflector 330 may include a material capable of reflecting light. For example, the prism reflector 330 may include metal such as aluminum (Al) and silver (Ag). The prism reflector 330 may include the same material as that of the backlight reflector 230. Accordingly, in the display apparatus according to the implementation of the present disclosure, light passing through the inclined surface 320c of the prism structure 320 may be reflected toward the inner side of the prism structure 320 by the prism reflector 330. As a result, in the display apparatus according to the implementation of the present disclosure, the amount of light supplied to the sensing area HA of the liquid crystal panel 100 may be increased by the prism structure 320.

The module sheet 340 may be positioned on the second prism surface 320b. The optical element 350 may be positioned on the module sheet 340 adjacent to the second prism surface 320b. For example, in the present disclosure, external light incident on the prism structure 320 through the camera hole CH may be supplied to the optical element 350 through the module sheet 340. Accordingly, in the present disclosure, external light may be detected by the optical element 350 without distortion by the backlight sheet 240, thereby improving detection characteristics of the optical element 350.

The module sheet 340 may be positioned between the prism structure 320 and the optical element 350. For example, the module sheet 340 may have a laminated structure in which a module adhesive layer 341, a module filter layer 342, and a module insulation layer 343 are laminated. The module adhesive layer 341 may be positioned close to the prism structure 320. The module adhesive layer 341 may be in direct contact with the prism structure 320.

For example, the module sheet 340 may be attached to the prism structure 320. The module insulation layer 343 may be positioned close to the optical element 350. The module filter layer 342 may be positioned between the module adhesive layer 341 and the module insulation layer 343. The module filter layer 342 may prevent diffusion of visible light among light traveling toward the optical element 350 through the prism structure 320. Here, visible light means light capable of being recognized by the human eye. For example, light having a wavelength range of approximately 400 nm to 700 nm may not pass through the module filter layer 342. Accordingly, the display apparatus according to the implementation of the present disclosure may prevent distortion of light supplied to the optical element 350, which is caused by diffuse reflection and/or regular reflection of visible light.

The optical element 350 may include an element capable of detecting external light. For example, the optical element 350 may include a camera 351 and an IR sensor 352. The module sheet 340 may include first holes 341a, 342a, and 343a corresponding to the camera 351 and second holes 341b and 343b corresponding to the IR sensor 352.

The first holes 341a, 342a, and 343a of the module sheet 340 may penetrate the module adhesive layer 341, the module filter layer 342, and the module insulation layer 343. For example, the first holes 341a, 342a, and 343a of the module sheet 340 may be formed of a first adhesive hole 341a penetrating the module adhesive layer 341, a filter hole 342a penetrating the module filter layer 342, and a first module hole 343a penetrating the module insulation layer 343. The second holes 341b and 343b of the module sheet 340 may respectively penetrate the module adhesive layer 341 and the module insulation layer 343.

The module filter layer 342 may include a filter area 342f overlapping the second holes 341b and 343b of the module sheet 340. For example, the second holes 341b and 343b of the module sheet 340 may be formed of a second adhesive hole 341b penetrating the module adhesive layer 341 and a second module hole 343b penetrating the module insulation layer 343. Accordingly, in the display apparatus according to the implementation of the present disclosure, external light passing through the first holes 341a, 342a, and 343a of the module sheet 340 may be provided to the camera 351, and external light passing through the second holes 341b and 343b of the module sheet 340 may be provided to the IR sensor 352. That is, in the present disclosure, external light including visible light is supplied to the camera 351, but visible light of external light traveling to the IR sensor 352 may be blocked by the filter area 342f of the module filter layer 342. Therefore, the display apparatus according to the implementation of the present disclosure may prevent deterioration in detection characteristics of the IR sensor 352 due to visible light.

Although the present implementation describes, as an example, a case in which the optical element 350 is formed of a camera and an IR sensor, the present disclosure is not limited thereto. The optical element 350 may include at least one of a motion sensor, an illuminance sensor, or an ultrasonic sensor.

The optical module 300 may be fixed on the backlight unit 200. For example, a fixing tape 400 may be positioned between the bottom cover 250 and the optical module 300. The fixing tape 400 may be in direct contact with the bottom cover 250 and the optical module 300. For example, the optical module 300 may be attached to the bottom cover 250 with the fixing tape 400 interposed therebetween.

Accordingly, in the display apparatus according to the implementation of the present disclosure, when the liquid crystal panel 100 generates an image, light that is supplied to the sensing area HA of the liquid crystal panel 100 by the module light source elements 310 that are turned on/off simultaneously with the backlight light source element 210 has the same luminance as that of light supplied to the active area AA of the liquid crystal panel 100, thereby improving characteristics of image quality (front-of-screen (FOS) quality) of the liquid crystal panel 100.

In addition, in the display apparatus according to the implementation of the present disclosure, when the liquid crystal panel 100 does not generate an image, external light applied through the sensing area HA of the liquid crystal panel 100, the light guide plate 220, and the prism structure 320 may be detected by the optical element 350. Therefore, the display apparatus according to the implementation of the present disclosure may detect external light without deterioration in image quality.

Meanwhile, in order to improve the quality of an image captured by the optical element 350, the width of the prism structure 320 may be formed to be smaller than the width of the camera hole CH overlapping the sensing area HA, as shown in FIG. 2A and FIG. 2B.

In this case, since the width of the prism structure 320 becomes smaller than the width of the camera hole CH, an area in which the camera hole CH and the prism structure 320 do not overlap each other is generated.

In this manner, when the area in which the camera hole CH and the prism structure 320 do not overlap each other is generated, even if the prism light sources 310 are operated, the sensing area HA may generate a dark portion in which the area in which the camera hole CH and the prism structure 320 do not overlap each other is displayed dark, resulting in a luminance difference. As a result, image quality (FOS quality) characteristics of the liquid crystal panel 100 may deteriorate.

The present disclosure may further include the compensation plate 360, the compensation reflector 380, and the compensation plate light source 370 to compensate for such deterioration in image quality (FOS quality) characteristics of the liquid crystal panel 100.

The compensation plate 360 may be positioned between the first prism surface 320a and the sheet hole 240h and may have a light extraction pattern. The compensation plate 360 may have the compensation plate light source 370 positioned on the side surface thereof. The compensation plate 360 may receive light from the compensation plate light source 370 and emit the light in the front surface direction D3 in which the liquid crystal panel 100 is positioned.

The compensation plate 360 may include a transparent material, and may include, for example, any one of glass, acrylic, polymethylmethacrylate (PMMA), and polycarbonate (PC). For example, the compensation plate 360 may include the same material as that of the light guide plate 220.

The thickness of the compensation plate 360 may be smaller than the thickness of the light guide plate 220, and a refractive index of the compensation plate 360 may be the same as a refractive index of the light guide plate 220. However, the present disclosure is not necessarily limited thereto, and the refractive index of the compensation plate 360 and the refractive index of the light guide plate 220 may be different from each other.

The compensation reflector 380 may be positioned on the back surface of the compensation plate 360. For example, the compensation reflector 380 may be provided in contact with the back surface of the compensation plate 360. The compensation reflector 380 may be positioned on the outer side of the first prism surface 320a and may not overlap the first prism surface 320a.

The compensation reflector 380 may include a material capable of reflecting light. For example, the compensation reflector 380 may include metal such as aluminum (Al) and silver (Ag). The compensation reflector 380 may include the same material as that of the backlight reflector 230.

The compensation plate light sources 370 are respectively positioned on the opposite side surfaces of the compensation plate 360 and allow light to enter the compensation plate 360. Each of the compensation plate light sources 370 may be a self-luminous element capable of generating and emitting light. For example, each of the compensation plate light sources 370 may include an LED. The compensation plate light source 370 may be the same element as that of the backlight light source 212. Each of the compensation plate light sources 370 may be connected to a corresponding one of the module circuit boards 390 (refer to FIG. 4) each configured to control on/off of the compensation plate light source 370. The compensation plate light sources 370 may be turned on/off simultaneously and may be driven simultaneously with the backlight light source 212.

Accordingly, while an image is displayed on the liquid crystal panel 100, light that is emitted from the compensation plate light sources 370 and enters the compensation plate 360 is refracted, reflected, or diffused by the light extraction pattern and the compensation reflector 380 and then is supplied in the front surface direction D3. In this manner, the light emitted from the compensation plate light sources 370 may be supplied to the area in which the camera hole CH and the prism structure 320 do not overlap each other.

Accordingly, the present disclosure may compensate for deterioration in image quality (FOS quality) of the liquid crystal panel 100 by removing, in the sensing area HA, the dark portion in which the area in which the camera hole CH and the prism structure 320 do not overlap each other is displayed dark.

Hereinafter, the structures of the compensation plate 360, the compensation reflector 380, and the compensation plate light source 370 will be described in more detail.

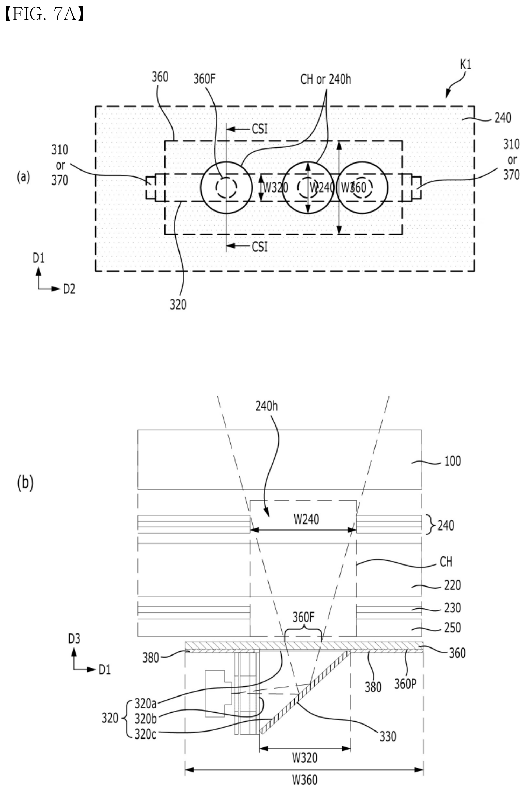

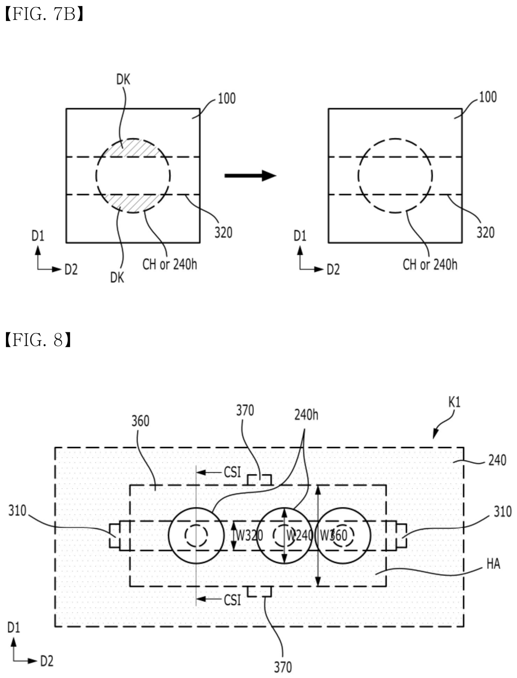

FIG. 7A is a view for description of a relationship between the sheet hole provided in the backlight sheet and the compensation plate and the prism structure of the optical module of the present disclosure, and FIG. 7B is a view showing a part of the sensing area HA while an image is displayed on the liquid crystal panel in order to describe the image quality (FOS quality) of the liquid crystal panel in the sensing area HA.

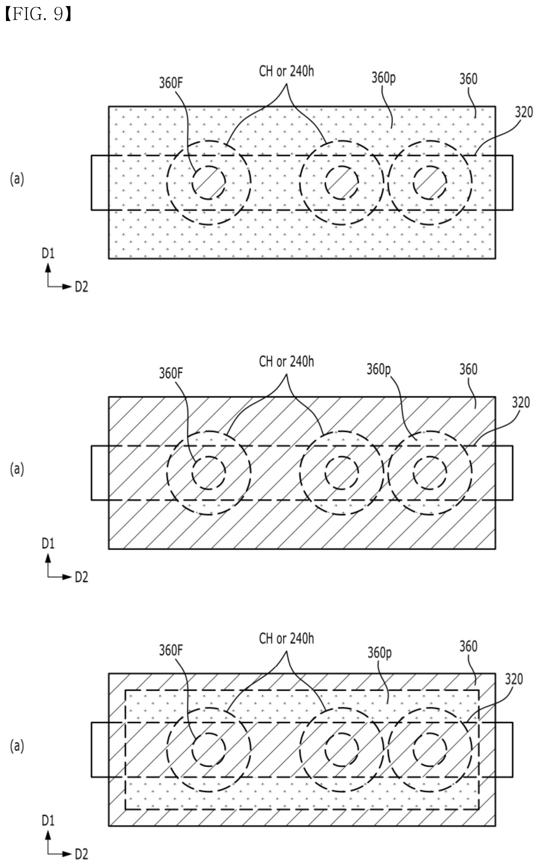

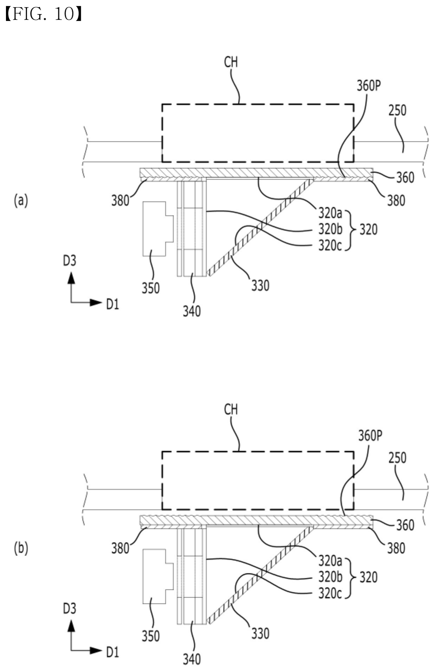

FIG. 8 is view for description of an example of the locations of the prism light source and the compensation plate light source of the present disclosure, FIG. 9 is a view for description of an example of a pattern area in which a light extraction pattern of the present disclosure is provided, and FIG. 10 is a view for description of an example of the location of the light extraction pattern on the surface of the compensation plate of the present disclosure.

FIG. 7A(a) is an enlarged plan view of a portion K1 including the sensing area HA in FIG. 1. In FIG. 7A(a), for convenience of understanding, some of the components described in FIGs. 1 to 6, such as the liquid crystal panel 100 and the light guide plate 220, are omitted, and the backlight sheet 240, the sheet hole 240h, the compensation plate 360, and the prism structure 320 are shown.

In addition, in FIG. 7A(a), for convenience of understanding, the width of the prism structure 320 in the second direction D2 is larger than the width of the compensation plate 360 in the second direction D2, but the present disclosure is not limited thereto. The widths of the prism structure 320 and the compensation plate 360 in the second direction D2 may be substantially the same.

In FIG. 7A(a), a case in which a plurality of sheet holes 240h of the backlight sheet 240 is formed in the sensing area HA is shown as an example, but this case is an example. In the sensing area HA, one sheet hole 240h of the backlight sheet 240 may be formed in the second direction D2, as shown in FIG. 4.

FIG. 7A(b) is a cross-sectional view taken along line CSI-CSI parallel to the first direction D1 in FIG. 7A(a). In FIG. 7A(b), for convenience of understanding, some of the components described in FIGs. 1 to 6, the prism light sources 310, and the compensation plate light sources 370 are omitted.

As shown in FIGs. 7A(a) and 7A(b), according to the implementation of the present disclosure, a width W320 of the prism structure 320 formed in the first direction D1 may be provided to be smaller than the width of the camera hole CH in order to improve the quality of an image captured by the optical element 350. For example, the width W320 of the first prism surface 320a may be formed to be smaller than a width W240 of the sheet hole 240h. Here, the camera hole CH may be a hole formed in a third direction D3 by the sheet hole 240h, the reflector hole 230h, and the cover hole 250h. Hereinafter, since the sheet hole 240h in the camera hole CH finally determines the field of view of the optical element 350, a case in which the camera hole CH has the same width as that of the sheet hole 240h will be described as an example.

As shown in FIG. 7A, the optical module 300 may be positioned on the back surface of the backlight unit 200 so as to overlap the sheet hole 240h forming the camera hole CH of the liquid crystal panel 100.

The first prism surface 320a of the prism structure 320 may be oriented toward the liquid crystal panel 100, the second prism surface 320b may be oriented toward the optical element 350, the inclined surface 320c may be positioned between the first prism surface 320a and the second prism surface 320b, the prism reflector 330 may be positioned on the inclined surface 320c, and the prism light sources 310 may be respectively positioned on the opposite side surfaces of the prism structure 320.

In the present disclosure, the width W320 of the first prism surface 320a is formed to be smaller than the width W240 of the camera hole CH or the sheet hole 240h, thereby improving the quality of an image captured by the optical element 350.

As shown in FIG. 7A(b), the compensation plate 360 having a light extraction pattern 360p may be positioned between the camera hole CH and the prism structure 320. For example, the compensation plate 360 having the light extraction pattern 360p may be positioned between the first prism surface 320a and the sheet hole 240h of the backlight sheet 240. The light guide plate 220, the reflector hole 230h of the backlight reflector 230, and the cover hole 250h of the bottom cover 250 may be positioned between the compensation plate 360 and the sheet hole 240h.

The width W360 of the compensation plate 360 formed in the first direction D1 may be formed to be larger than the width W240 of the sheet hole 240h formed in the first direction D1. The light extraction pattern 360p of the compensation plate 360 may be positioned on the surface of the compensation plate 360 and may have unevenness including a concave shape or a convex shape.

The compensation reflector 380 is positioned on the back surface of the compensation plate 360. Here, as shown in FIG. 7A(b), the compensation reflector 380 may be positioned outside the first prism surface 320a such that the compensation reflector 380 does not overlap the first prism surface 320a and overlaps the light extraction pattern 360p. In addition, a part of the compensation reflector 380 may overlap the camera hole CH or the sheet hole 240h.

The compensation plate light sources 370 configured to allow light to enter the compensation plate 360 may be respectively positioned on the opposite side surfaces of the compensation plate 360. Each of the compensation plate light sources 370 may be operated with the backlight light source 212. Therefore, while the screen is displayed on the liquid crystal panel 100, the compensation plate light sources 370 may be turned on to provide light. Further, while the screen is not displayed on the liquid crystal panel 100, the compensation plate light sources 370 may be turned off, and the optical element 350 may detect external light.

Light supplied from the compensation plate light sources 370 may be reflected, refracted, and diffused by the light extraction pattern 360p of the compensation plate 360 and the compensation reflector 380. The compensation plate light sources 370 may supply light to an area of the camera hole CH, which does not overlap the prism structure 320. Accordingly, in the present disclosure, as shown in FIG. 7B, it is possible to compensate for deterioration in image quality (FOS quality) characteristics of the liquid crystal panel 100 by providing the compensation plate 360, the compensation reflector 380, and the compensation plate light sources 370, as shown in FIGs. 7A(a) and 7A(b).

FIG. 7B(a) shows a screen of the liquid crystal panel 100 when the compensation plate 360, the compensation reflector 380, and the compensation plate light sources 370 are not provided, and FIG. 7B(b) shows a screen of the liquid crystal panel 100 when the compensation plate 360, the compensation reflector 380, and the compensation plate light sources 370 are provided.

In a state in which the width W320 of the prism structure 320 is smaller than the width of the camera hole CH or the sheet hole 240h, and the compensation plate 360, the compensation reflector 380, and the compensation plate light sources 370 are not provided, when the backlight light source 212 and the prism light sources 310 are operated to display the screen on the liquid crystal panel 100, as shown in FIG. 7B(a), an area in which the sheet hole 240h and the prism structure 320 overlap each other on the screen of the liquid crystal panel 100 and an outer area of the sheet hole 240h may have uniform luminance. However, since light emitted from the prism light sources 310 is not supplied to the area in which the sheet hole 240h and the prism structure 320 do not overlap each other (that is, an area in which the prism structure 320 is not positioned within the sheet hole 240h), a luminance difference may occur due to a dark portion DK that is displayed dark due to relatively low luminance. As a result, image quality (FOS quality) characteristics of the liquid crystal panel 100 may deteriorate.

However, in the present disclosure, when the compensation plate 360, the compensation reflector 380, and the compensation plate light sources 370 are provided, even if the width of the prism structure 320 is formed to be relatively small, the dark portion DK may be removed by supplying light from the compensation plate light sources 370 to the area in which the sheet hole 240h and the prism structure 320 do not overlap each other. As a result, as shown in FIG. 7B(b), the luminance of the area in which the sheet hole 240h and the prism structure 320 do not overlap each other may be equal to the luminance of the area outside the sheet hole 240h. Accordingly, it is possible to compensate for deterioration in image quality (FOS quality) characteristics of the liquid crystal panel 100.

FIG. 7A(a) shows, as an example, a case in which the prism light sources 310 and the compensation plate light sources 370 are respectively positioned on the opposite side surfaces of the prism structure 320 and the opposite side surfaces of the compensation plate 360 in the second direction D2, but the present disclosure is not limited thereto. The prism light sources 310 and the compensation plate light sources 370 may not overlap each other and may be positioned at different portions.

For example, as shown in FIG. 8, the prism light sources 310 may be respectively positioned on the side surfaces of the prism structure 320, which face each other in the second direction D2, such that the prism light sources 310 face each other in the second direction D2, and the compensation plate light sources 370 may be respectively positioned on the side surfaces of the compensation plate 360, which face each other in the first direction D1, such that the compensation plate light sources 370 face each other in the first direction D1.

In addition, the light extraction pattern area 360p provided with a light extraction pattern having unevenness formed on the surface of the compensation plate 360 may be provided outside a field-of-view corresponding area 360F of the compensation plate 360, which corresponds to the field of view of the optical element 350, as shown in FIG. 7A(b) and FIG. 9.

For example, the light extraction pattern area 360p of the compensation plate 360 may be provided in various ways, as shown in FIG. 9. FIG. 9 shows the compensation plate 360 and the light extraction pattern area 360p. In FIG. 9, portions corresponding to the field-of-view corresponding area 360F, the sheet hole 240h, and the prism structure 320 in the compensation plate 360 are indicated by dotted lines.

The field-of-view corresponding area 360F of the compensation plate 360 may overlap the prism structure 320. The size of the field-of-view corresponding area 360F of the compensation plate 360 may be smaller than the width of the prism structure 320. For example, the size of the field-of-view corresponding area 360F of the compensation plate 360 may be smaller than the width W320 of the prism structure 320.

The field-of-view corresponding area 360F of the compensation plate 360 may overlap the camera hole CH or the sheet hole 240h. The size of the field-of-view corresponding area 360F of the compensation plate 360 may be smaller than the camera hole CH or the width W240 of the sheet hole 240h.

The light extraction pattern area 360p of the compensation plate 360 may be positioned outside the field-of-view corresponding area 360F of the compensation plate 360, as shown in FIGs. 9(a) to 9(c). For example, the light extraction pattern area 360p of the compensation plate 360 may be positioned entirely outside the field-of-view corresponding area 360F, as shown in FIG. 9(a), or may be positioned in a part of the outer side of the field-of-view corresponding area 360F of the compensation plate 360, as shown in FIGs. 9(b) and 9(c).

In the compensation plate 360, the light extraction pattern area 360p may be formed to have a curved surface corresponding to each camera hole CH or each sheet hole 240h on the outer side of the prism structure 320, as shown in FIG. 9(b), or may be formed in a square shape corresponding to the entire camera hole CH or sheet hole 240h on the outer side of the prism structure 320, as shown FIG. 9(c).

Here, a part of the light extraction pattern area 360p may be positioned to overlap the sheet hole 240h, as shown in FIG. 9. Further, FIGs. 9(b) and 9(c) show an example in which the light extraction pattern area 360p is positioned outside the prism structure 320, but the present disclosure is not necessarily limited thereto. Here, a part of the light extraction pattern area 360p may overlap the prism structure 320.

The light extraction pattern area 360p may be positioned on the back surface of the compensation plate 360, which faces the prism structure 320, as shown in FIG. 10(a), or may be positioned on the front surface of the compensation plate 360, which faces the light guide plate 220, as shown in FIG. 10(b).

In addition, in the compensation plate 360, flatness of the field-of-view corresponding area 360F may be higher than flatness of the light extraction pattern area 360p. Accordingly, in the present disclosure, it is possible not only to maximally reduce distortion of external light detected by the optical element 350, but also to compensate for deterioration in image quality (FOS quality) characteristics of the liquid crystal panel 100.

A case in which the field-of-view corresponding area 360F of the compensation plate 360 is not perforated has been described as an example, but a hole may be positioned in the field-of-view corresponding area 360F of the compensation plate 360 in order to improve transmittance. Hereinafter, the above-mentioned hole will be described in detail.

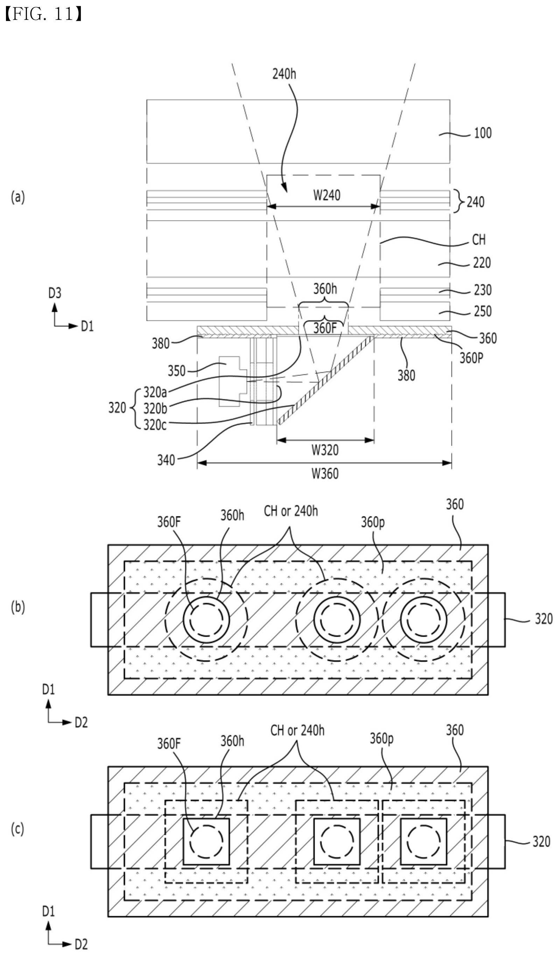

FIG. 11 is a view for description of an example of a compensation plate hole provided in the compensation plate of the present disclosure.

FIG. 11(a) is a cross-sectional view for description of a compensation plate hole 360h provided in the compensation plate of the present disclosure, and FIGs. 11(b) and 11(c) are views for description of the shape of the compensation plate hole 360h.

As shown in FIG. 11(a), in order to improve transmittance, the compensation plate 360 may be provided with the compensation plate hole 360h in the field-of-view corresponding area 360F. The size of the compensation plate hole 360h may be formed to be larger than the field-of-view corresponding area 360F of the compensation plate 360, as shown in FIGs. 11(b) and 11(c). The width of the compensation plate hole 360h in the first direction D1 may be formed to be smaller than the width of the prism structure 320 in the first direction D1. Accordingly, it is possible not only to maximally reduce the influence on the field of view of the optical element 350, but also to compensate for deterioration in image quality (FOS quality) characteristics of the liquid crystal panel 100, thereby further improving transmittance of external light detected by the optical element 350.

The shape of the compensation plate hole 360h may be modified depending on the shape of the camera hole CH or the sheet hole 240h. For example, as shown in FIG. 11(b), when the flat shape of the camera hole CH or the shape of the sheet hole 240h is formed as a circular shape or an oval shape, the shape of the compensation plate hole 360h may also be formed as a circular shape or an oval shape. Further, as shown in FIG. 11(c), when the flat shape of the camera hole CH or the shape of the sheet hole 240h is formed as a square shape, the shape of the compensation plate hole 360h may also be formed as a square shape. In addition, the width of the compensation plate hole 360h may be formed to be equal to or smaller than the width of the prism structure 320.

Furthermore, FIG. 11 shows, as an example, a case in which the camera hole CH or the sheet hole 240h is provided corresponding to the location of each optical element 350, and the compensation plate hole 360h is also provided corresponding to the location of each optical element 350, but the present disclosure is not limited thereto.

For example, as shown in FIG. 4, when one camera hole CH or one sheet hole 240h is provided in the sensing area HA corresponding to a plurality of optical elements 350, one compensation plate hole 360h may also be provided in the compensation plate 360 corresponding thereto.

As described above, according to the implementations of the present disclosure, the quality of an image captured by an optical element may be improved when the width of the prism structure 320 is formed to be smaller than the width of the camera hole CH. Further, the compensation plate 360 having a larger width than that of the camera hole CH or the sheet hole 240h, the compensation reflector 380, and the compensation plate light sources 370 are provided, thereby removing, in the sensing area (HA), the dark portion DK in which a non-overlapping portion formed between the prism structure 320 and the sheet hole 240h is displayed dark while the image is displayed on the liquid crystal panel 100. In this manner, it is possible to compensate for deterioration in image quality (FOS quality) characteristics of the liquid crystal panel 100.

As is apparent from the above description, a display apparatus according to one implementation of the present disclosure includes an optical module including a compensation plate having a light extraction pattern formed thereon and a compensation plate light source, thereby improving image quality of an optical element and image quality (front-of-screen (FOS) quality) characteristics of an image displayed in a sensing area of a liquid crystal panel.

Specifically, according to the implementation of the present disclosure, the width of a prism is formed to be smaller than the width of a sheet hole of a backlight sheet, thereby improving the quality of an image captured by the optical element. Additionally, the compensation plate having a larger width than that of a camera hole or the sheet hole, a compensation reflector, and the compensation plate light source are provided, thereby removing, in the sensing area, a dark portion in which a non-overlapping portion formed between the prism and the sheet hole is displayed dark while the image is displayed on the liquid crystal panel. As a result, it is possible to compensate for deterioration in image quality (FOS quality) characteristics of the liquid crystal panel.

It will be apparent to those skilled in the art that various modifications and variations can be made in the present disclosure without departing from the spirit or scope of the disclosure. Thus, it is intended that the present disclosure cover the modifications and variations of this disclosure provided they come within the scope of the appended claims and their equivalents. Also disclosed herein are a number of examples according to the following numbered clauses:
1. A display apparatus comprising:
   a backlight unit comprising a light guide plate, a backlight sheet having a sheet hole, and a backlight light source element configured to emit light to the light guide plate;
   a liquid crystal panel positioned on a front surface of the backlight unit; and
   an optical module positioned on a portion of a back surface of the backlight unit, the portion overlapping the sheet hole, wherein the optical module comprises:
      a prism structure comprising a first prism surface oriented toward the liquid crystal panel, a second prism surface perpendicular to the first prism surface, and an inclined surface positioned between the first prism surface and the second prism surface;
      an optical element positioned adjacent to the second prism surface; and
      a compensation plate positioned between the first prism surface and the sheet hole and having a light extraction pattern.
2. The display apparatus according to clause 1, further comprising:
   a compensation plate light source; and
   wherein the compensation plate is configured to receive light from the compensation plate light source.
3. The display apparatus according to clause 2, wherein the optical module further comprises:
   a compensation reflector positioned on a back surface of the compensation plate,
   wherein the compensation reflector is configured to reflect light received from the compensation plate light source toward the liquid crystal panel.
4. The display apparatus according to any preceding clause, wherein a width of the first prism surface in a first direction is smaller than a width of the sheet hole in the first direction.
5. The display apparatus according to any preceding clause, wherein the optical module further comprises:
   a prism light source configured to emit light into the prism structure; and
   a prism reflector positioned on the inclined surface of the prism structure.
6. The display apparatus according to any preceding clause, wherein:
   the compensation plate defines a field-of-view area aligned with the optical element; and
   the light extraction pattern is positioned on the compensation plate in a region outside of the field-of-view area.
7. The display apparatus according to any preceding clause, wherein:
   the compensation plate comprises a compensation plate hole formed therethrough; and
   the compensation plate hole is aligned with the optical element to improve transmittance of external light to the optical element.
8. A display apparatus comprising:
   a backlight unit having a sheet hole;
   a liquid crystal panel positioned on the backlight unit, the liquid crystal panel defining the sensing area in alignment with the sheet hole; and
   an optical module positioned to overlap the sheet hole, the optical module comprising:
      a first illumination assembly configured to illuminate a central portion of the sensing area, the first illumination assembly comprising a prism structure and a first light source positioned to emit light into the prism structure;
      a second illumination assembly configured to illuminate a peripheral portion of the sensing area around the central portion, the second illumination assembly comprising a compensation plate and a second light source positioned to emit light into the compensation plate; and
      an optical element positioned to receive external light passing through the prism structure.
9. The display apparatus according to clause 8, wherein the prism structure has a width in a first direction that is smaller than a width of the sheet hole in the first direction, and wherein the peripheral portion of the sensing area corresponds to a region between an edge of the prism structure and an edge of the sheet hole.
10. The display apparatus according to clause 8 or clause 9, wherein the prism structure comprises a first prism surface oriented toward the liquid crystal panel, a second prism surface oriented toward the optical element, and an inclined surface positioned between the first and second prism surfaces, and wherein the first illumination assembly further comprises a prism reflector positioned on the inclined surface.
11. The display apparatus according to clause 8, 9 or 10, wherein the compensation plate comprises a light extraction pattern configured to direct light received from the second light source toward the peripheral portion of the sensing area.
12. The display apparatus according to clause 11, wherein the second illumination assembly further comprises a compensation reflector positioned on a back surface of the compensation plate.
13. The display apparatus according to any of clauses 8 - 12, wherein the first light source and the second light source are configured to be driven simultaneously with a backlight light source element of the backlight unit.
14. The display apparatus according to any of clauses 8 - 13, wherein the optical element comprises a camera and an infrared (IR) sensor.
15. The display apparatus according to any of clauses 8 - 14, further comprising:
   a module sheet positioned between the prism structure and the optical element, the module sheet comprising a module filter layer configured to block visible light from reaching the IR sensor while passing external light to the camera.

## Claims

1. A display apparatus comprising:
a backlight unit comprising a light guide plate, a backlight sheet having a sheet hole, and a backlight light source element configured to emit light to the light guide plate;
a liquid crystal panel positioned on a front surface of the backlight unit; and
an optical module positioned on a portion of a back surface of the backlight unit, the portion overlapping the sheet hole, wherein the optical module comprises:
a prism structure comprising a first prism surface oriented toward the liquid crystal panel, a second prism surface perpendicular to the first prism surface, and an inclined surface positioned between the first prism surface and the second prism surface;
an optical element positioned adjacent to the second prism surface; and
a compensation plate positioned between the first prism surface and the sheet hole and having a light extraction pattern.

2. The display apparatus according to claim 1, further comprising:
a compensation plate light source; and
wherein the compensation plate is configured to receive light from the compensation plate light source.

3. The display apparatus according to claim 2, wherein the optical module further comprises:
a compensation reflector positioned on a back surface of the compensation plate,
wherein the compensation reflector is configured to reflect light received from the compensation plate light source toward the liquid crystal panel.

4. The display apparatus according to any preceding claim, wherein a width of the first prism surface in a first direction is smaller than a width of the sheet hole in the first direction.

5. The display apparatus according to any preceding claim, wherein the optical module further comprises:
a prism light source configured to emit light into the prism structure; and
a prism reflector positioned on the inclined surface of the prism structure.

6. The display apparatus according to any preceding claim, wherein:
the compensation plate defines a field-of-view area aligned with the optical element; and
the light extraction pattern is positioned on the compensation plate in a region outside of the field-of-view area.

7. The display apparatus according to any preceding claim, wherein:
the compensation plate comprises a compensation plate hole formed therethrough; and
the compensation plate hole is aligned with the optical element to improve transmittance of external light to the optical element.

8. A display apparatus comprising:
a backlight unit having a sheet hole;
a liquid crystal panel positioned on the backlight unit, the liquid crystal panel defining the sensing area in alignment with the sheet hole; and
an optical module positioned to overlap the sheet hole, the optical module comprising:
a first illumination assembly configured to illuminate a central portion of the sensing area, the first illumination assembly comprising a prism structure and a first light source positioned to emit light into the prism structure;
a second illumination assembly configured to illuminate a peripheral portion of the sensing area around the central portion, the second illumination assembly comprising a compensation plate and a second light source positioned to emit light into the compensation plate; and
an optical element positioned to receive external light passing through the prism structure.

9. The display apparatus according to claim 8, wherein the prism structure has a width in a first direction that is smaller than a width of the sheet hole in the first direction, and wherein the peripheral portion of the sensing area corresponds to a region of the sensing area overlapping an area between an edge of the prism structure and an edge of the sheet hole.

10. The display apparatus according to claim 8 or claim 9, wherein the prism structure comprises a first prism surface oriented toward the liquid crystal panel, a second prism surface oriented toward the optical element, and an inclined surface positioned between the first and second prism surfaces, and wherein the first illumination assembly further comprises a prism reflector positioned on the inclined surface.

11. The display apparatus according to claim 8, claim 9 or claim 10, wherein the compensation plate comprises a light extraction pattern configured to direct light received from the second light source toward the peripheral portion of the sensing area.

12. The display apparatus according to claim 11, wherein the second illumination assembly further comprises a compensation reflector positioned on a back surface of the compensation plate.

13. The display apparatus according to any of claims 8 - 12, wherein the first light source and the second light source are configured to be driven simultaneously with a backlight light source element of the backlight unit.

14. The display apparatus according to any of claims 8 - 13, wherein the optical element comprises a camera and an infrared (IR) sensor.

15. The display apparatus according to any of claims 8 - 14, further comprising:
a module sheet positioned between the prism structure and the optical element, the module sheet comprising a module filter layer configured to block visible light from reaching the IR sensor while passing external light to the camera.
